# EUROPEAN PATENT APPLICATION

(11) **EP 1 079 139 A1**
(43) Date of publication of application: **28.02.2001**
(21) Application number: 99306579.6
(22) Date of filing: 20.08.1999
(51) Int. Cl.: F16F 9/46

(54) **Adjustable pneumatic shock absorber for use with the front fork of a bicycle**

(71) Applicant: Tsai, Chin-Song, Hsin Chuang City, Taipei Hsien (TW)
(72) Inventor: Tsai, Chin-Song, Hsin Chuang City, Taipei Hsien (TW)
(74) Representative: Jennings, Nigel Robin

(57) **Abstract**

An adjustable pneumatic shock absorber mounted in a fork of a bicycle is disclosed. The adjustable pneumatic shock absorber has an external tube (10), an internal tube (20) movably provided within the external tube (10), a piston (30) mounted on the internal tube (20) and an adjusting shaft (40) provided in the piston (30) and the internal tube (20). The piston (30) has a through hole (36) defined in the periphery thereof. The adjusting shaft (40) has a plurality of orifices (44) with various diameters. The through hole (36) can be aligned with one of the orifices (44). According to different roads, the speed of the internal tube (20) moving back out of the external tube can be adjusted by selecting the orifice (44) aligned with the through hole (36).

## Description

### 1. Field of the Invention

The present invention relates to an adjustable pneumatic shock absorber, and more particularly to a light-weight pneumatic shock absorber assembled on the front fork of a bicycle, which can be adjusted to adapt to different terrain.

### 2. Description of Related Art

Generally, a bicycle has a shock absorber mounted on the fork to attenuate shock and vibration. A conventional shock absorber is either made of flexible material or uses the circulation of hydraulic fluid. These shock absorbers are self-adjusting to adapt to different roads. However, they are heavy and increase the overall weight of the bicycle.

Another type of shock absorber uses a pneumatics. Although the pneumatic shock absorber is light-weight, the flow of the air in the shock absorber cannot be adjusted to adapt to different terrain. Therefore, when on different road surfaces such as on a flat or a bumpy road, uphill or downhill, the rider cannot adjust the damping action to adapt to the terrain.

Therefore, it is an object of the present invention to provide an adjustable pneumatic shock absorber to mitigate and/or obviate the aforementioned problems.

The main object of the present invention is to provide an adjustable pneumatic shock absorber assembled on the fork of a bicycle, wherein the shock absorber is not only lightweight, but also can be adjusted to adapt to different roads.

Other objects, advantages and novel features of the invention will become more apparent from the following detailed description when taken in conjunction with the accompanying drawings.

### IN THE DRAWINGS:

Fig. 1 is an exploded perspective view of an adjustable pneumatic shock absorber in accordance with the present invention;
Fig. 2 is a cross sectional side view of the adjustable pneumatic shock absorber in Fig. 1;
Fig. 3 is a cross sectional side view of the adjustable pneumatic shock absorber in Fig. 1 showing the internal tube compressed into the external tube;
Fig. 4 is a side plan view showing the inner structure of a piston of the adjustable pneumatic shock absorber in Fig. 1;
Fig. 5 is a partial cross sectional side view of the piston shown in Fig. 4;
Fig. 6 is a bottom plan view of the piston shown in Fig. 4;
Fig. 7 is a cross sectional side view of the piston in Fig. 4 assembled with an adjusting shaft;
Fig. 8 is a cross sectional top view of the piston in Fig. 7 along line 8-8;
Fig. 9 is a cross sectional top view of the piston in Fig. 4along line 9-9;
Fig. 10 is a perspective view of the adjusting shaft of the adjustable pneumatic shock absorber in accordance with the present invention;
Fig. 11 is a side plan view of the adjusting shaft in Fig. 10;
Fig. 12 is a cross sectional view showing the adjusting shaft along line 12-12 in Fig. 11; and
Fig. 13 is a cross sectional top view of the adjusting shaft in Fig. 12 along line 13-13.

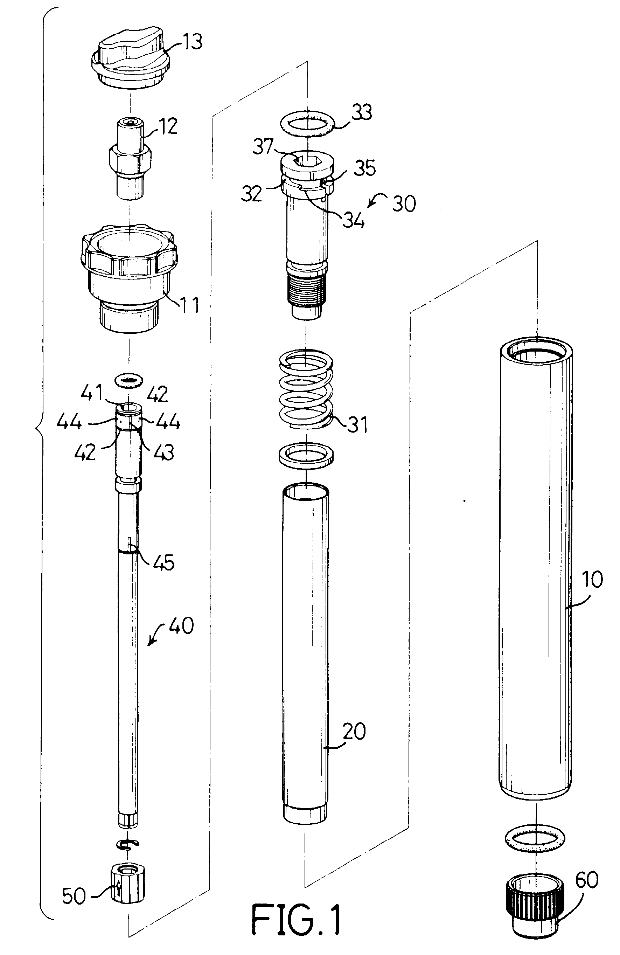

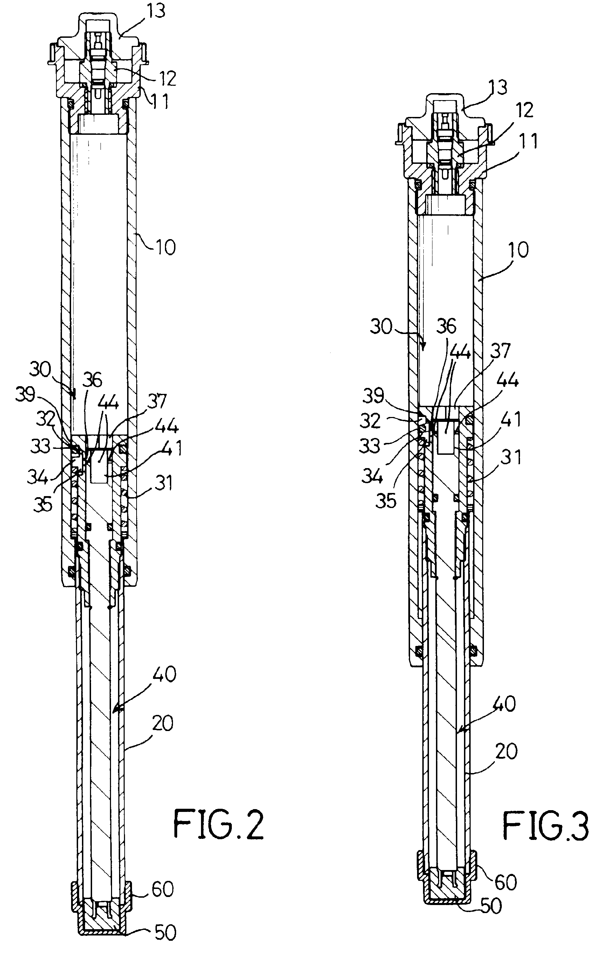

Referring to Figs. 1 and 2, an adjustable pneumatic shock absorber in accordance with the present invention provides an external tube (10) having a plug (11) mounted on the top of the external tube (10). A valve (12) is located within the plug (11). A cap (13) covering the valve (12) is firmly attached to the plug (11).

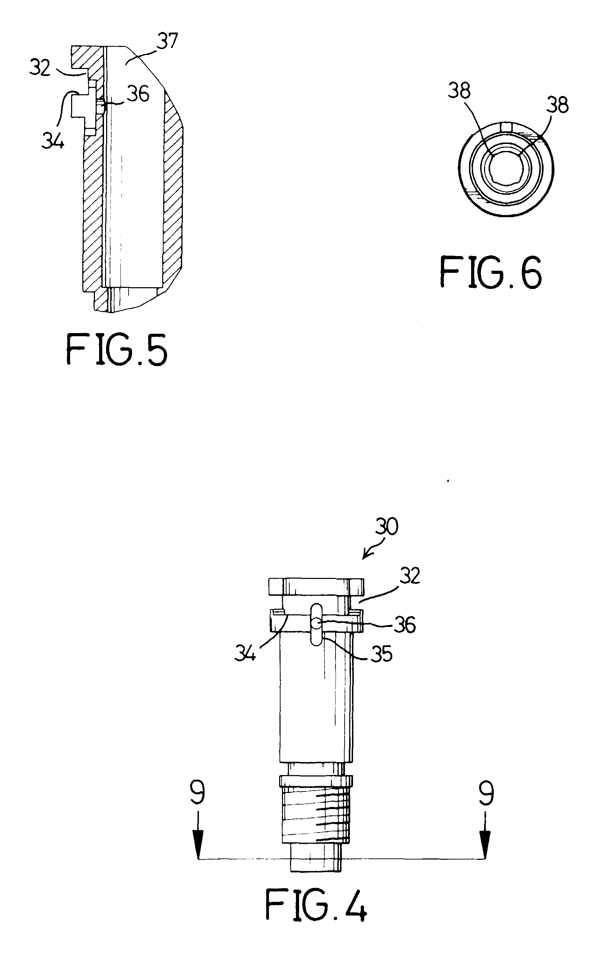

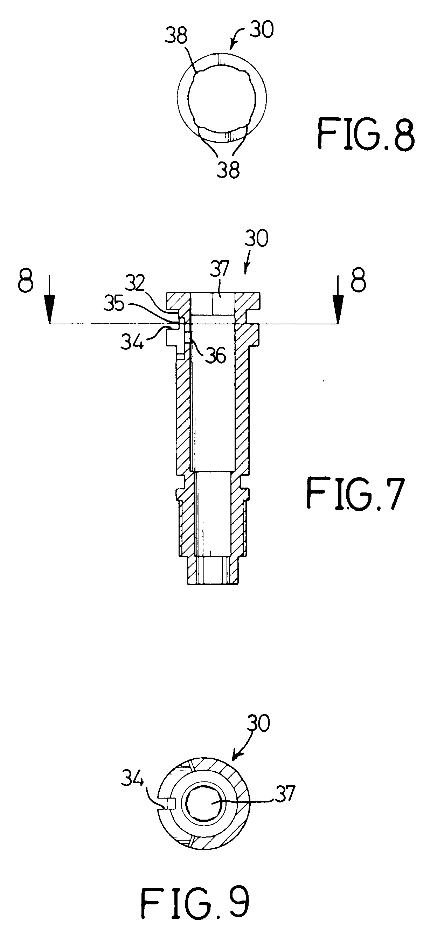

An internal tube (20) is slidably mounted in the external tube (10) and can be extended downwards from the lower end of the external tube (10). A piston (30) is mounted on the top of the internal tube (20). A spring (31) is located between the external tube (10) and the internal tube (20) to keep the end faces of the external tube (10) and the internal tube (20) from impacting each other when the external tube (20) slides out from the internal tube (10). Referring to Figs. 1, 4, 5, 6, 7 and 8, the piston (30) defines an annular slot (32) in the top portion thereof and has an O-ring (33) in the annular slot (32). The O-ring (33) protrudes out from the annular slot (32). A cavity (34) is defined in the lower edge of the annular slot (32) so as to communicate with the annular slot (32). A recess (35) is longitudinally defined in the lower edge of the annular slot (32) and is in communication with the cavity (34) and the annular slot (32). A through hole (36) is defined in the side face defining the recess (35) and is in communication with an opening (37) axially defined through the piston (30). The outer diameter of the top portion of the piston (30) is less than the inner diameter of the external tube (10), so that there is a gap (39) between the external tube (10) and the top portion of the piston (30). Furthermore, a plurality of notches (38) are defined equally spaced in the bottom of the piston (30), as shown in Figs. 6 and 9.

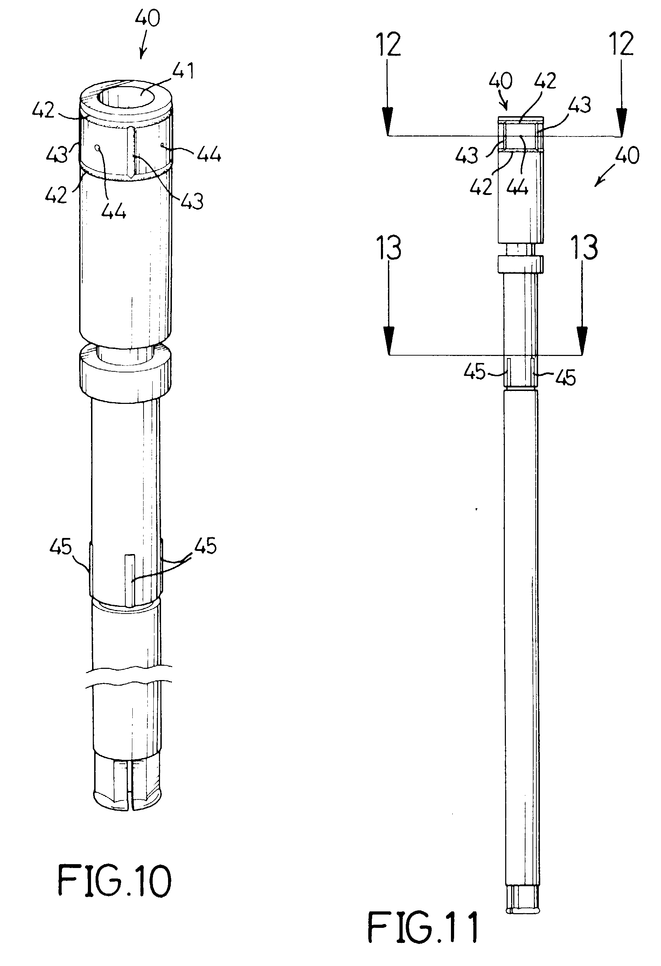

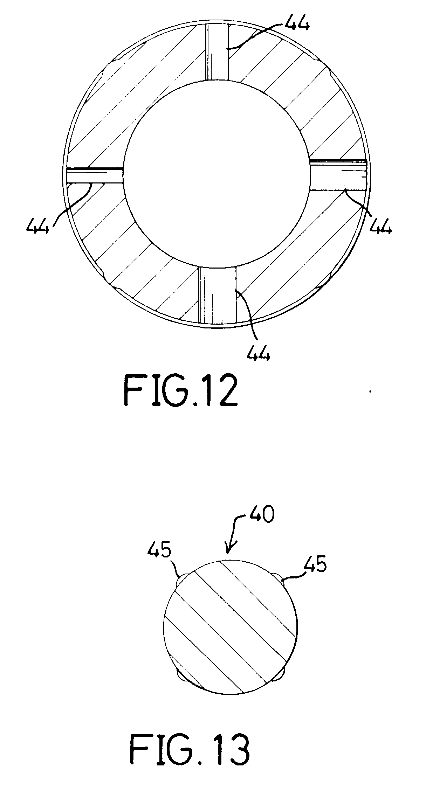

An adjusting shaft (40) is rotatably provided in the internal tube (20). The upper end of the adjusting shaft (40) is received in the opening (37) of the piston (30). Referring to Fig. 10, the adjusting shaft (40) defines a blind hole (41) in the upper end and forms a plurality of annuluses (42) and ribs (43) in the upper periphery to ensure the airtight fit between the piston (30) and the adjusting shaft (40). A plurality of orifices (44) with various diameters are spatially defined in the upper periphery of the adjusting shaft (40), as shown in Figs. 11 and 12. The orifices (44) are defined to communicate with the blind hole (41), and one of them is aligned with the through hole (36) of the piston (30). The diameters of the orifices (44) can be 0.4mm, 0.6mm, 0.8mm, 1.0mm, etc. Referring to Figs. 11 and 13, a plurality of ridges (45) are formed in the middle periphery of the adjusting shaft (40). The ridges (45) are received in the notches (38) of the piston (30) to position the adjusting shaft (40) with respect to the piston (30).

A knob (50) is securely attached to the bottom of the adjusting shaft (40) to rotate the adjusting shaft (40). A cover (60) is provided over the knob (50) on the bottom of the internal tube (20), such that when a user is going to rotate the shaft (40) to readjust the alignment between one of the orifices (44) with the through hole (36), the user must remove the cover (60) from the bottom of the internal tube (20) to expose the knob (50).

Referring to Figs. 2 and 3, when the pneumatic shock absorber is assembled on the front fork of a bicycle (not shown), gas is pre-charged into the external tube (10). When the bicycle experiences a shock, the internal tube (20) is pressed into the external tube (10). The external tube (10) takes the O-ring (33) downwards to touch the lower edge of the annular slot (32), and a part of the O-ring seal (33) is then received in the cavity (34). The gas in the external tube (10) will flow through the gap (39), the annular slot (32) and the recess (35) into a space defined between the piston (30) and the external tube (10). Thus, the internal tube (20) can be smoothly pressed into the external tube (10).

When the internal tube (20) returns to its original position in the external tube (10), the O-ring (33) is taken upwards by the external tube (10) to touch the upper edge of the annular slot (32), so the previous air passage is blocked. The gas must flow through the annular slot (32), the through hole (36), the orifice (44), the blind hole (41) and the opening (37). Because the diameter of the orifice (44) is small, the flow speed of the gas is low and the internal tube (20) returns slowly.

According to different roads, a user can change the orifice (44) aligned with the through hole (36) to adjust the flow speed of the gas. The flow speed is in direct proportion to the diameter of the orifice (44) aligned with the through hole (36), e.g. the smaller the diameter, the lower the flow speed. In adjusting, the cover (60) is taken off and the knob (50) is turned to align another orifice (44) with the through hole (36). The ridges (45) are located in other notches (38) of the piston (30) to position the adjusting shaft (40). Because friction of the ridges (45) and the notches (38) will generate sound, the user can determine whether the adjusting shaft (40) has been positioned by hearing and feel.

The invention has the following advantages:
1. Because the pneumatic shock absorber is an air-operated device, its weight is light than that of a hydraulic device.
2. A user can adjust the return speed of the pneumatic shock absorber according to different roads.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. An adjustable pneumatic shock absorber comprising:
an external tube (10) having a plug (11) mounted on the top thereof, a valve (12) provided within the plug (11), and a cap (13) mounted on the plug (11) to cover the valve (12);
an internal tube (20) slidably provided within the external tube (10);
a piston (30) securely mounted on top of the internal tube (20) and having a through hole (36) defined in the periphery thereof, wherein the outer diameter of the upper end of the piston (30) is slightly less than the inner diameter of the external tube (10) so as to define a gap (39) between the piston (30) and the external tube (10) when the piston (30) is securely mounted on top of the internal tube (20) and received in the external tube (10); and
an adjusting shaft (40) received within the internal tube (20) and the piston (30) and having a plurality of orifices (44) with various diameters defined in the upper periphery thereof, a blind hole (41) defined in the upper end thereof, and a knob (50) mounted on the bottom of the adjusting shaft (40), wherein these orifices (44) are alternatively in communication with the blind hole (41) and are alternatively aligned with the through hole (36);
whereby, turning the knob (50) can change the alignment between one of the orifices (44) and the through hole (36) so as to adjust the speed of the movement of the internal tube (20) with respect to the external tube (10).

2. The adjustable pneumatic shock absorber as claimed in claim 1, wherein the piston (30) further comprises an annular slot (32) defined in the upper end thereof, a cavity (34) defined in the lower edge of the annular slot (32), a recess (35) defined in the lower edge of the annular slot (32) and communicating with the annular slot (32) and the cavity (34), and an O-ring (33) provided in the annular slot (32); and the through hole (36) is defined in the recess (35).

3. The adjustable pneumatic shock absorber as claimed in claim 1, wherein the adjusting shaft (40) comprises a plurality of annuluses (42) and ribs (43) formed in the upper end thereof to strengthen the tightness between the adjusting shaft and the inner wall of the piston.

4. The adjustable pneumatic shock absorber as claimed in claim 1, wherein the diameters of the orifices (44) are 0.4 mm, 0.6 mm, 0.8 mm, 1.0 mm and so on.

5. The adjustable pneumatic shock absorber as claimed in claim 1, wherein the piston (30) further comprises a plurality of notches (38) defined in the bottom thereof, and the adjusting shaft (40) further comprises a plurality of ridges (45) formed on the middle portion thereof to engage with the notches (38) of the piston (30).

6. The adjustable pneumatic shock absorber as claimed in claim 1 further comprises a cover (60) mounted over the knob (50) on the bottom of the external tube.

7. The adjustable pneumatic shock absorber as claimed in claim 1 further comprises a spring (31) located between the piston (30) and the external tube (10).
